(19) **Europäisches Patentamt / European Patent Office / Office européen des brevets**

(11) **EP 2 091 275 B1**

(12) **EUROPEAN PATENT SPECIFICATION**

(45) Date of publication and mention
of the grant of the patent:
**06.04.2011 Bulletin 2011/14**

(51) Int Cl.:
***H04W 48/20*** *(2009.01)*

(21) Application number: **08002821.0**

(22) Date of filing: **15.02.2008**

(54) **Method and a device for selecting which base station has to handle a half-duplex terminal**

Verfahren und Vorrichtung zur Auswahl einer Basisstation für ein Halbduplex-Endgerät

Procédé et dispositif pour sélectionner la station de base qui doit prendre en charge un terminal semi-duplex

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**19.08.2009 Bulletin 2009/34**

(73) Proprietors:
• **Mitsubishi Electric R&D Centre Europe B.V.**
**1119 NS Schiphol Rijk (NL)**
Designated Contracting States:
**FR**
• **MITSUBISHI ELECTRIC CORPORATION**
**Chiyoda-ku**
**Tokyo 100-8310 (JP)**
Designated Contracting States:
**AT BE BG CH CY CZ DE DK EE ES FI GB GR HR HU IE IS IT LI LT LU LV MC MT NL NO PL PT RO SE SI SK TR**

(72) Inventors:
• **Brunel, Loic**
**CS 10806**
**35708 Rennes Cedex 7 (FR)**
• **Mourad, Alain**
**CS 10806**
**35708 Rennes Cedex 7 (FR)**
• **Mottier, David**
**CS 10806**
**35708 Rennes Cedex 7 (FR)**

(74) Representative: **Maillet, Alain**
**Cabinet Le Guen Maillet**
**5 Place Newquay**
**B.P. 70250**
**35802 Dinard Cedex (FR)**

(56) References cited:
**GB-A- 2 418 806**          **US-A1- 2003 002 450**
**US-A1- 2004 137 908**     **US-A1- 2004 266 474**

**Description**

The present invention relates generally to a method and a device for selecting, in a wireless cellular telecommunication network, which base station has to handle a terminal.

When a terminal is trying to connect to a wireless cellular telecommunication network, several base stations may be available for handling the terminal. An initial cell-search procedure is therefore required from the terminal so as to synchronise its receiver to a base station that is capable of handling the terminal, i.e. be able to enable the terminal to communicate with other telecommunication devices through the base station. The handling of a new terminal by a specific base station is then decided so as to optimise the global network efficiency.

Similarly, the handling of a terminal by another base station may be decided during communication according to a so-called handover procedure.

The quality of the channel between a terminal and a base station may vary according to the propagation environments like the distance between the terminal and the base station, the presence of obstacles etc.

Initial cell-search procedure requires the detection, by the terminal, of signals in the downlink channel, more precisely in a measurement channel such as a synchronisation channel, a pilot channel or a data channel. Each base station transfers regularly that signal. The signals in different measurement channels may be detected and the quality of these signals is evaluated by the terminal. The terminal may then store the measurements of the quality of these signals.

Initial cell-search procedure consists in identifying the base station which signals are received with the best quality, e.g. which signals received by the terminal from the base station have a power strength upper than a predetermined value and/or higher than the power strength of signals transferred by other base stations.

Once this base station has been identified, a random access procedure is initiated by the terminal towards the identified base station through a contention-based channel, i.e. a channel that is accessible to any terminal with no reservation mechanisms.

The base station identifies the new terminal and sends to the terminal, downlink-specific control information for communication establishment (e.g., resource reservation, uplink synchronisation mismatch, etc.).

Classically, a candidate set of base stations which could in theory handle the communication is regularly assigned to each terminal. These candidate base stations may be for instance base stations surrounding the base station which is currently handling the terminal. Each terminal regularly measures, or measures on demand, i.e. after a particular event, the quality of the signals in the measurement channels of the different candidate base stations. These measurements are then reported by the terminal to the base station which is currently handling the terminal which may decide whether to start a handover procedure.

Alternatively, a candidate set of base stations is not assigned to the terminals. Each terminal performs measurements with the base stations from which it measures signals with enough quality. Then, the terminal reports the measurements to the base station which is currently handling the terminal which may decide whether to start a handover procedure.

Such a state-of the-art handover, as well as initial cell search procedures, are valid for full-duplex terminals but may lead to some issues for half duplex terminals.

A full-duplex terminal is a terminal which is able to transmit and receive radio signals simultaneously.

A half-duplex terminal is a terminal which is not able to transmit and receive radio signals simultaneously. For instance, the terminal operates in Time Division Duplex (TDD) mode, with transmission and reception on the same frequency band but at different time periods. The terminal may also operate in Frequency Division Duplex (FDD) mode, with transmission and reception on different frequency bands and at different time periods.

When a base station transmits symbols at time te to a half-duplex terminal, these symbols are received by the terminal located at a distance d from the base station at a time equal to te + RTD(d)/2, where RTD(d) is the Round Trip Delay for the terminal. These symbols are processed by the terminal which then may transmit also symbols over the uplink channel to the base station. Before transmitting symbols over the uplink channel, the terminal TE has to wait for a period of time, said Receive Transmit Switch time or simply switching time and referred to as RTS, in order to take into account the duration of hardware and software operations. For instance, this delay RTS is the maximum of the time needed by hardware equipments of the terminals to switch between reception and transmission modes and the time needed by hardware equipments of the base station to switch between transmission and reception modes. Thus, the symbols transmitted over the uplink channel cannot be received at the base station BTS before a time tr equal to te + RTD(d) + RTS + $D_{DL}$, $D_{DL}$ being the total duration of the symbols which the terminal can receive in the downlink channel.

An idle period duration needs to be created, either at both the base station and the terminal sides or only at the terminal side in order to make the base station able to handle terminals located at any position in the cell. The idle period to be used by a half duplex terminal may vary from one cell to another according to the cell size and/or the distance between the half-duplex terminal and the base station of the cell. If the idle period is fixed for every half-duplex terminal of the same cell, the idle period may vary according to the size of the cell. Alternatively, if the base station accepts half-duplex terminal specific idle period as described in the European patent application EP1746743, the idle period varies according to the distance between the half-duplex terminal and the base station.

In the patent application EP1746743, the base station BS determines, for each terminal TE handled by the base station BS, the number of supplementary downlink symbols in a downlink time slot that can be allocated to the terminal TE.

If for a terminal TEi situated at a distance di from the base station BS, the time delay TD(di) is comprised between the duration of a number $n_{dl}$ of downlink symbols and the duration of a number $n_{dl} + 1$ of downlink symbols, respectively plus the switching time RTS, the base station BTS can insert information for that terminal TEi in $n_{dl}$ supplementary downlink symbols. This condition can be mathematically written as follows :

$$\text{if } n_{dl} \cdot ts_{dl} \leq TD(di) - RTS < (n_{dl} + 1) \, ts_{dl} \text{ then insert at most } n_{dl} \text{ supplementary symbols.}$$

As the number of downlink symbols varies according to the destination terminal TE, the idle period varies also according to the destination terminal TE.

The patent application US2004/0266474 discloses a method and apparatus for facilitating base station selection handover in which distance between a receiving user terminal and one or more base station is considered.

The patent application GB2418806 discloses a base station which broadcast a base station duplex capability message to user equipments.

The present invention aims at selecting, in a wireless cellular telecommunication network, which base station has to handle a terminal in order to provide to the terminal the best communication conditions.

To that end, the present invention concerns a method for selecting, in a wireless cellular telecommunication network, which base station, among plural base stations, has to handle a half-duplex terminal, the base stations transferring signals in a respective cell, the half-duplex terminal, when being handled by a base station, not transferring and not receiving signals during a period of time, called idle period, characterized in that the method comprises the steps of :

- obtaining quality measurements on the signals transferred by the base stations,
- determining, from the quality measurement on the signal transferred by each base station, the modulation and coding scheme which is appropriate with the quality measurement,
- obtaining, for each base station, the idle period to be used in order to be handled by the base station,
- determining, from the quality measurements and idle periods, effective throughputs that can be expected between the base stations and the half duplex terminal,
- selecting the base station which has to handle the terminal according to the effective throughputs that can be expected between the base stations BS and the half duplex terminal.

The present invention concerns also a device for selecting, in a wireless cellular telecommunication network, which base station, among plural base stations, has to handle a half-duplex terminal, the base stations transferring signals in a respective cell, the half-duplex terminal, when being handled by a base station, not transferring and not receiving signals during a period of time, called idle period, characterized in that the device comprises :

- means for obtaining quality measurements on the signals transferred by the base stations,
- means for determining, from the quality measurement on the signal transferred by each base station, the modulation and coding scheme which is appropriate with the quality measurement,
- means for obtaining, for each base station, the idle period to be used in order to be handled by the base station,
- means for determining, from the quality measurements and idle periods, the effective throughputs that can be expected between the base stations BS and the half-duplex terminal.
- means for selecting the base station which has to handle the terminal according to the effective throughputs that can be expected between the base stations BS and the half duplex terminal.

Thus, the half-duplex terminal is ensured to have its throughput optimised.

Based on the measurements reported by any terminal, the base station may be able to calculate the throughput according to the modulation and coding schemes which are appropriate for this terminal. The present invention considers the effective transmission duration, taking into account the idle period duration for determining the effective throughput

According to a particular feature, the selected base station is the base station providing the maximum effective throughput for the half-duplex terminal.

Thus, the performance of the transmission for that particular half-duplex terminal is optimised.

In a variant, the selected base station is the base station providing the effective throughput which allows maximising the overall system throughput aggregated over all terminals.

According to a particular feature, the wireless telecommunication network uses half duplex Frequency Division Duplexing scheme and only half duplex terminals handled by the base station do not transfer and do not receive signals during the idle period to be used in order to be handled by the base station or the half-duplex terminals handled by the base station and the base station do not transfer and do not receive signals during the idle period to be used in order to be handled by the base station.

Thus, the specific implementation costs at the base station due to half-duplex FDD terminals are reduced or the power consumption of the base station is limited.

According to a particular feature, the wireless telecommunication network uses Time Division Duplexing scheme and the half-duplex terminals handled by the base station and the base station do not transfer and do not receive signals during the idle period to be used in order to be handled by the base station.

Thus, the interference between uplink and downlink communication is reduced.

According to a particular feature, one base station handles the terminal and the base station which handles the terminal executes the present invention.

Thus, there is no need of coordination among base stations for processing handover requests of half-duplex terminals.

According to a particular feature, the quality measurements are obtained from a measurement report transferred by the terminal.

Thus, there is no quality measurement to perform at the base station.

According to a particular feature, the present invention is executed by the terminal.

Thus, the decision of handover is decentralised with no need of signalling between base station and half-duplex terminals.

According to a particular feature, the quality measurements are measured by the terminal.

Thus, the complexity of the base station is reduced.

According to a particular feature, the terminal further initiates a random access procedure with the selected base station.

Thus, the random access procedure is accelerated.

According to still another aspect, the present invention concerns a computer program which can be directly loadable into a programmable device, comprising instructions or portions of code for implementing the steps of the method according to the invention, when said computer program is executed on a programmable device.

Since the features and advantages relating to the computer program are the same as those set out above related to the method and device according to the invention, they will not be repeated here.

The characteristics of the invention will emerge more clearly from a reading of the following description of an example embodiment, the said description being produced with reference to the accompanying drawings, among which :

Fig. 1a is a diagram representing the architecture of the wireless cellular telecommunication network in which the present invention is implemented when the idle period is determined for the cell of each base station;

Fig. 1b is a diagram representing the architecture of the wireless cellular telecommunication network in which the present invention is implemented when in at least one cell, the idle period is adjusted for each terminal located in the cell;

Fig. 2a is a chronogram depicting the idle period when the uplink channel is synchronous and where the base station and the half-duplex terminal don't transfer and receive signals in the idle period ;

Fig. 2b is a chronogram depicting the idle period when the uplink channel is synchronous and where the half-duplex terminal does not transfer and receive signals in the idle period ;

Fig. 3 is a chronogram depicting the idle period when the uplink channel is synchronous, the wireless telecommunication network uses Time Division Duplexing scheme and the half-duplex terminal located in the cell and the base station do not transfer and do not receive signals during the idle period ;

Fig. 4 is a diagram representing the architecture of a base station of the wireless telecommunication system according to the present invention;

Fig. 5 is a diagram representing the architecture of a terminal of the wireless telecommunication system according to the present invention;

Fig. 6 is an example of algorithm executed by a base station when the base station implements the present invention ;

Fig. 7 is an example of algorithm executed by a half duplex terminal when the half-duplex terminal implements the present invention.

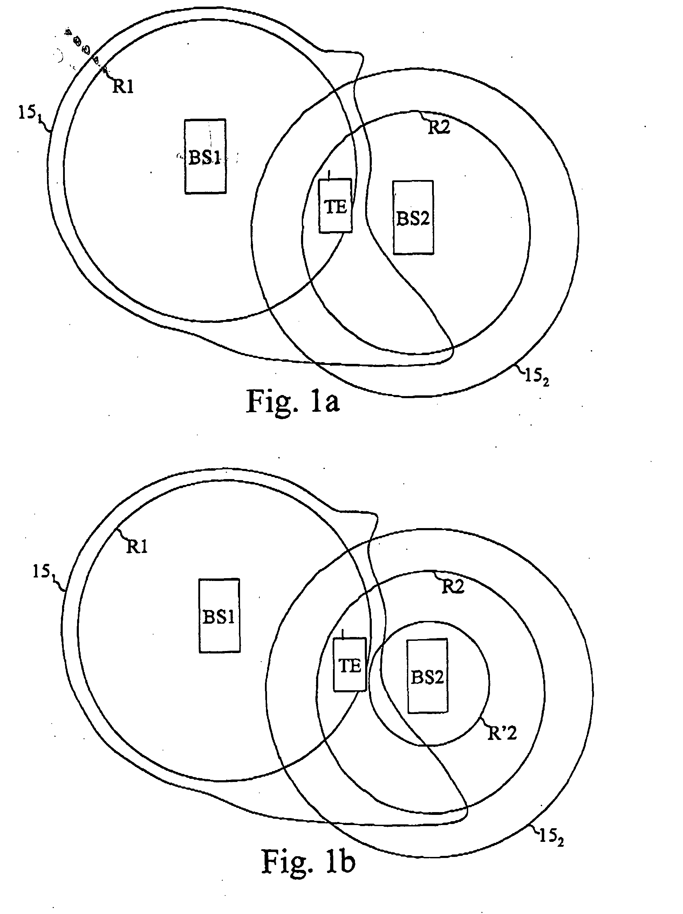

**Figs.1** are diagrams representing the architecture of the wireless cellular telecommunication network in which the present invention is implemented.

The wireless cellular telecommunication network may be a wireless telecommunication system which uses Time Division Duplexing scheme (TDD) or half duplex Frequency Division Duplexing scheme.

In TDD scheme, the signals transferred in uplink and downlink channels are duplexed in different sub frames, named also time slots, in the same frequency band.

In full duplex Frequency Division Duplexing scheme, the signals transferred in uplink and downlink channels are duplexed in same sub frames, named also time slots, in different frequency bands.

In half duplex FDD scheme, from the half-duplex terminal side, the signals transferred in uplink and downlink channels are duplexed in different sub frames, named also time slots, in different frequency bands. It should be noted that in such case, a base station may be able to use a full duplex Frequency Division Duplexing scheme whilst communicating with several half-duplex FDD terminals at the same time by appropriately ordering the time slots of each half-duplex FDD terminal.

When a base station BS transfers symbols to a terminal TE, the data, the signals or the messages are transferred through a downlink channel.

When a terminal TE transfers symbols to the base station BS, the signals, the messages or data are transferred through an uplink channel.

In the telecommunication network of the Figs. 1, one terminal TE is comprised in a cell $15_1$ of a base station BS1 and in the cell $15_2$ of the base station BS2.

Only two base stations BS are shown in the Figs. 1 for the sake of simplicity but in practice, the wireless cellular telecommunication network is composed of plural base stations BS.

The cell $15_1$ of the base station BS1 is the area in which the power strength of the signals transferred by the base station BS1, like the one transferred in the measurement channel of the base station BS1, are received by a terminal TE located in the cell $15_1$ at a level which is upper than a predetermined value. When a full-duplex terminal TE is located in the cell $15_1$ of the base station BS1, the base station BS1 can handle the full-duplex terminal TE. The full-duplex terminal TE can establish or receive a communication with a remote telecommunication device through the base station BS1. The cell $15_1$ has not a regular shape. This is mainly due to the particular locations which are in line of sight with the base station BS1 or obstructions.

The area R1 of the base station BS1 is the area in which, for each terminal TE located in the area R1, the sum of the round trip delay between the base station BS1 and the terminal TE and the switch between receive and transmit modes and/or the switch between transmit and receive modes is lower than or equal to the idle period of the cell $15_1$.

In the Figs. 1, the area R1 is included in the cell $15_1$. The area R1 may be larger than the cell $15_1$.

When a half-duplex terminal TE is located in the cell $15_1$ and is not located in area R1 of the base station BS1, the half-duplex terminal TE can not be handled by the base station BS1 as the round trip delay for the terminal TE is not compatible with the idle period of the cell $15_1$.

The difference between R1 and $15_1$ is defined by the idle period set for the cell $15_1$.

The cell $15_2$ of the base station BS2 is the area in which the power strength of the signals, like the one transferred in the measurement channel of the base station BS2, is received by a terminal TE located in the cell $15_2$ at a level which is upper than a predetermined value. When a full-duplex terminal TE is located in the cell $15_2$ of the base station BS2, the base station BS2 can handle the full-duplex terminal TE. The full-duplex terminal TE can establish or receive a communication with a remote telecommunication device through the base station BS2.

In the Fig. 1a, the area R2 of the base station BS2 is the area in which, for each terminal TE located in R2, the sum of the round trip delay between the base station BS2 and the terminal TE and the switch between receive and transmit modes and/or the switch between transmit and receive modes is lower than or equal to the idle period of the cell $15_2$.

In the Fig. 1a, the area R2 is comprised in the cell $15_2$. The area R2 may also comprise the cell $15_2$.

When a half-duplex terminal TE is located in the cell $15_2$ and is not located in area R2 of the base station BS2, the half-duplex terminal TE can not be handled by the base station BS2 as the terminal TE is not compatible with the idle period of the cell $15_2$.

In the example of the Fig. 1a, the area R2 is smaller than the area R1.

The larger the area R is, the larger the idle period is. The idle periods set respectively by the base stations BS1 and BS2 are, in the example of the Fig. 1, different.

In the Fig. 1b, the area R'2 of the base station BS2 is the area wherein a terminal TE can receive information from the base station BS2 in $n_{d1}$ supplementary downlink symbols.

In the Fig. 1b, the area R2 of the base station BS2 which is not included in the area R'2, is the area wherein a terminal TE cannot receive information from the base station BS2 in $n_{d1}$ supplementary downlink symbols.

The idle period IP'2 for the terminals TE comprised in the area R'2 is smaller than the idle period IP2 for the terminals TE located in the area R2 of the base station BS2 which is not included in the area R'2.

When a half-duplex terminal TE is located in the cell $15_2$ and is not located in the area R'2 of the base station BS2, the half-duplex terminal TE can not be handled by the base station BS2 with the idle period IP'2 as the terminal TE is not compatible with the idle period IP'2 of the cell $15_2$. However, the terminal TE can be handled by the base station BS2 with the idle period IP2 as the terminal TE is in the area R2.

Only one terminal TE is shown in the Fig. 1 for the sake of simplicity but in practice, a more important number of terminals TE which are full-duplex or half-duplex, are in the cells 15 of the base stations BS. The base stations BS are able to determine if each terminal TE is a full-duplex or a half-duplex terminal TE.

The base stations BS are also named a node or a node B or an enhanced node B or an access point.

The terminal TE is a half-duplex terminal like mobile phones, personal digital assistants, or personal computers. The terminals TE are also named user equipments.

The wireless telecommunication network may be cell-synchronised. In this case, the signals originated from different cells 15 or base stations BS are simultaneously transmitted.

More precisely, the signals are structured in frames, which are themselves composed of symbols. Cell synchronisation may be ensured at the symbol level meaning that the transmission time of a symbol at a given cell 15 or base station BS matches the transmission time of a symbol at any other cell 15 or base station BS. Cell synchronisation may also be ensured at the frame level. In that case, the transmission time of a frame at a given cell 15 or base station BS matches the transmission time of a frame at any other cell 15 or base station BS. Cell synchronisation can be carried out by including a GNSS (Global Navigation Satellite System) in each base station BS.

As an alternative, the wireless telecommunication network may be cell-desynchronised. In this case, no synchronisation at the frame level nor at the symbol level needs to be ensured between different cells 15 or base stations BS.

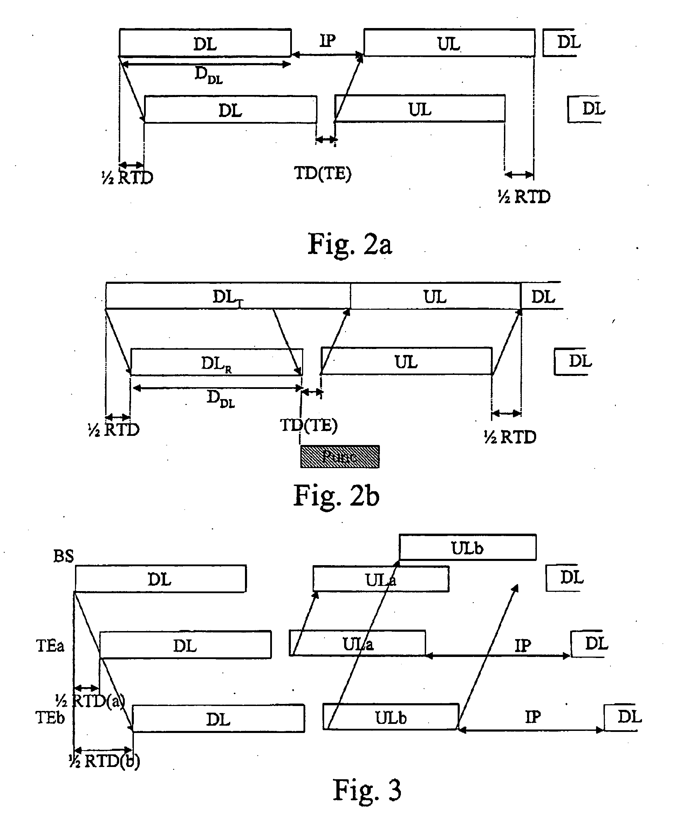

**Fig. 2a** is a chronogram depicting the idle period when the uplink channel is synchronous and where the base station and the half-duplex terminal don't transfer and receive signal in the idle period.

When the uplink channel is synchronous, the symbols transmitted in the uplink channel of a given cell 15 of a base station BS have to be received at the same time tr by the base station BS, regardless of the distance separating the base station BS and the terminal TE. When no signal is received or transferred during the idle period by both the base station and the half-duplex terminal side, the base station BS has to wait for the reception of the symbols transmitted by the terminal TE in order to perform the processing thereof.

The waiting time determined for the terminal TE which is located at the border of the area R1 or R2 or in other words, the largest waiting time that can be determined, is called the Guard Period or idle period IP and must be equal at least to the round trip delay RTD(Ra) plus the Receive Transmit Switch times RTS, where Ra is the radius of the area R1 or R2 if the area R1 or R2 is considered as a circle.

The base station BS1 transfers downlink symbols DL to the terminal TE. These downlink symbols DL are received by the terminal TE at a delay equal to half of the round trip delay RTD.

During the idle period IP, the base station BS doesn't transfer or receive any symbol. By not transferring or receiving any symbol, power consumption of the base station is reduced.

As the uplink symbols need to be received by the base station BS at the same time regardless of the distance separating the base station BS and each terminal TE comprised in its cell 15, the base station BS determines a timing delay TD(d) for each of the terminals TE.

The timing delay is calculated using the following formula:

$TD(d) = tr - te - D_{DL} - RTD(d) = IP - RTD(d)$, where d is the distance between the terminal TE and the base station BS and $D_{DL}$ being the total duration of the symbols the terminal can receive in the downlink channel.

From each timing delay, the base station BS determines the Timing Advance $TA = IP - TD(d)$ for each terminal TE and transfers the Timing Advance to the corresponding terminal TE.

In case the terminal TE1 is scheduled in the uplink timeslot just following a preceding downlink timeslot comprising data for the terminal TE, the terminal TE applies its Timing Advance TA(TE) value for the transmission of symbols over the uplink channel in such a manner that the transmitted symbols are received at the base station BS from the terminal TE at the beginning of the uplink timeslot tr.

It has to be noted here that the idle period IP is discontinuous. It is composed for the terminal TE of the time periods noted ½ RTD and the time period TA(TE).

**Fig. 2b** is a chronogram depicting the idle period when the uplink channel is synchronous and where the half-duplex terminal does not transfer and receive signals in the idle period.

During the idle period in the example of the Fig. 2b, only the terminal TE does not receive or transfer signals.

The base station BS transfers symbols in the downlink channel $DL_T$ without any consideration of an idle period. The base station BS considers each terminal TE as being potentially a full-duplex terminal TE. The base station BS may transfer symbols even if they are not usable by the half-duplex terminals. Transferring non-usable symbols reduces development cost for manufacturing specific features of base stations BS which are able to handle full and half-duplex terminals.

When a half-duplex terminal TE, as example the terminal TE, receives the symbols in the downlink channel $DL_T$, the terminal TE executes some puncturing on the received symbols. The terminal TE receives only the downlink symbols in $DL_R$ which are compatible with the idle period, i.e. the downlink symbols which are comprised in the duration $D_{DL}$ of the symbols the terminal can receive in the downlink channel.

The timing advance TA(TE) and the timing delay TD(TE) for the terminal TE are determined in a similar way as it has been disclosed in the Fig. 2a.

It has to be noted here that the idle period is continuous at the base station BS whereas the idle period is discontinuous at the half-duplex terminal TE. It is composed for the terminal TE of two time periods noted ½ RRTD and the time delay TD(TE).

Those signals Punc, which are not comprised in $D_{DL}$ are not processed.

**Fig. 3** is a chronogram depicting the idle period when the uplink channel is asynchronous, the wireless telecommunication network uses Time Division Duplexing scheme and the half-duplex terminal located in the cell and the base station do not transfer and do not receive signals during the idle period.

When the uplink channel is asynchronous, i.e. when the symbols transmitted in the uplink channel from different terminals TE do not have to be received at the same time, each terminal TEa or TEb transmits uplink symbols ULa or ULb over the uplink channel after a same predefined duration after the end of the reception of the signals transmitted by the base station BS in the downlink channel. The idle period is thus created at the base station BS to absorb the different propagation distance of the different terminals in the cell 15.

The terminal TEa is closer to the base station BS than the terminal TEb. The terminal TEa receives downlink symbols DL after half a round trip delay RTD (a) which is lower than half the round trip delay RTD(b) of the terminal TEb.

If the terminal TEa transfers symbols, these symbols are received by the base station BS earlier than the one transferred by the terminal TEb as it is shown in the Fig. 3.

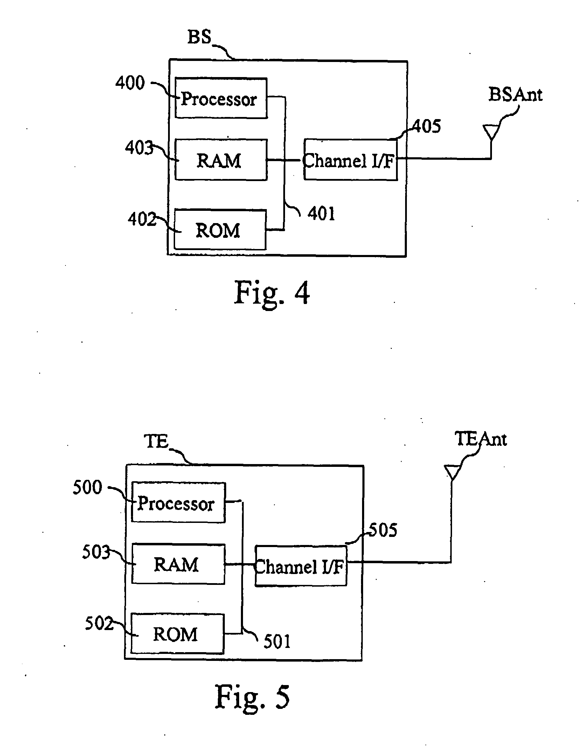

**Fig. 4** is a diagram representing the architecture of a base station according to the present invention.

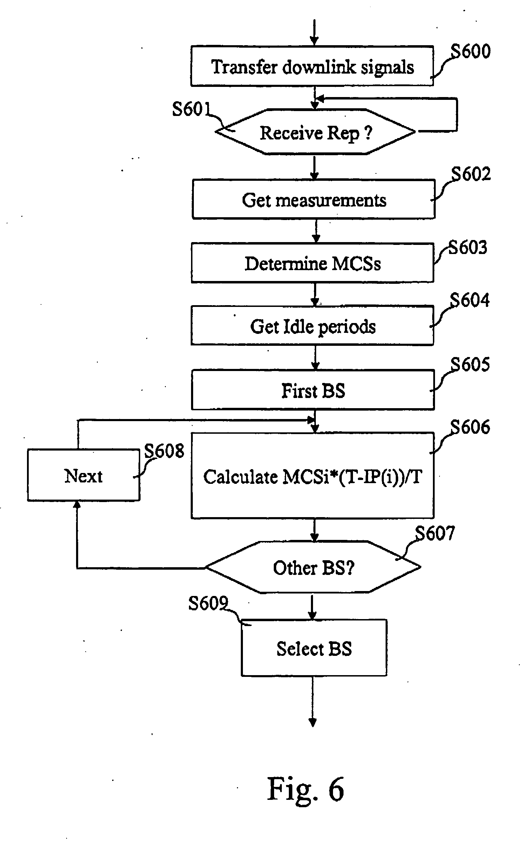

The base stations BS, as example the base station BS1, have for example an architecture based on components connected together by a bus 401 and a processor 400 controlled by the program related to the algorithm as disclosed in the Fig. 6.

It has to be noted here that the base station BS1 is, in a variant, implemented under the form of one or several dedicated integrated circuits which execute the same operations as the one executed by the processor 400 as disclosed hereinafter.

The bus 401 links the processor 400 to a read only memory ROM 402, a random access memory RAM 403 and a channel interface 405.

The read only memory ROM 402 contains instructions of the program related to the algorithm as disclosed in the Fig. 6 which are transferred, when the base station BS is powered on to the random access memory RAM 3.

The RAM memory 403 contains registers intended to receive variables, and the instructions of the program related to the algorithm as disclosed in the Fig. 6.

The channel interface 405 comprises means for transferring and/or receiving signals and/or messages to terminals TE through the antenna BSAnt.

**Fig. 5** is a diagram representing the architecture of a terminal according to the present invention.

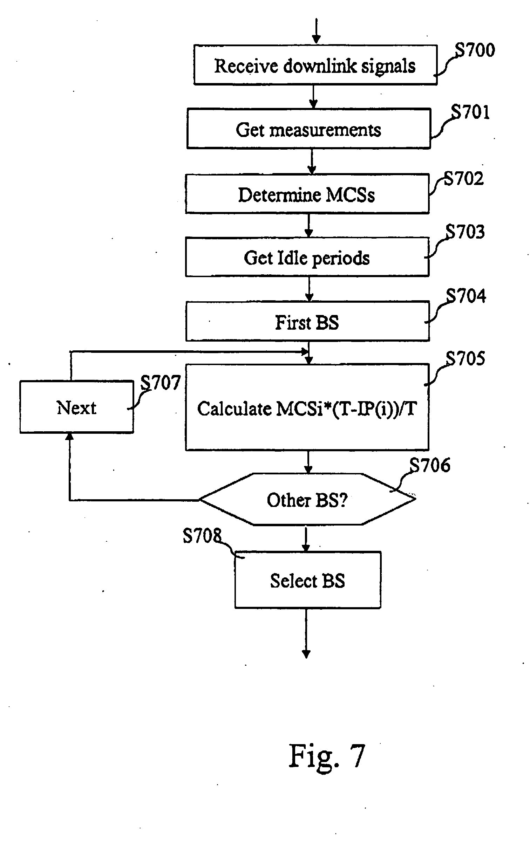

The terminal TE has, for example, an architecture based on components connected together by a bus 501 and a processor 500 controlled by programs related to the algorithms as disclosed in the Fig. 7.

It has to be noted here that the terminal TE is, in a variant, implemented under the form of one or several dedicated integrated circuits which execute the same operations as the one executed by the processor 500 as disclosed hereinafter.

The bus 501 links the processor 500 to a read only memory ROM 502, a random access memory RAM 503 and a channel interface 505.

The read only memory ROM 502 contains instructions of the programs related to the algorithms as disclosed in the Fig. 7 which are transferred, when the terminal TE is powered on to the random access memory RAM 503.

The RAM memory 503 contains registers intended to receive variables, and the instructions of the programs related to the algorithms as disclosed in the Fig. 7.

The channel interface 505 comprises means for transferring and/or receiving signals and/or messages to base stations BS through the antenna TEAnt and means for measuring the signals received, as example the signals Sync of the measurement channels.

**Fig. 6** is an example of algorithm executed by a base station when the base station implements the present invention.

More precisely, the present algorithm is executed by the processor 400 of each base station BS periodically or in response to a predetermined event.

At step S600, the processor 400 of the base station BS commands the channel interface 405 to transfer at least one downlink signal. The at least one downlink signal is transferred in the measurement channel of the base station BS.

At next step S601, the processor 400 waits for the reception of a message in response to the at least one transferred downlink signal.

At next step S602, the processor 400 gets quality measurements from the received message.

At next step S603, the processor 400 determines, for each received quality measurement on signal transferred by a base station, the modulation and coding scheme which is appropriate with the quality measurement.

At next step S604, the processor 400 obtains, for each quality measurement on the signal transferred by a base station BS, the idle period to be used in order to be handled by the base station BS.

The idle period to be used in order to be handled by a base station BS can be the idle period used in the cell of the base station BS by each terminal TE or can be the terminal specific idle period as disclosed in the Fig. 1b.

The idle period to be used in order to be handled by each surrounding base station BS is as example memorised in the RAM memory 403.

At next step S605, the processor 400 selects a first base station BS for which quality measurement on the signal transferred by the base station BS is comprised in the received message.

At next step S606, the processor 400 determines the effective throughput that can be expected between the base station BS and the half-duplex terminal TE.

The effective throughput is determined according to the determined modulation and coding scheme and the idle period to be used in order to be handled by the base station BS.

The effective throughput is determined according to the following formula:

$$\text{Throughput(i)} = MCS(i) * \frac{T - IP(i)}{T}$$, where i is an index associated to the selected base station BS, *MCS(i)* is the modulation and coding scheme determined from the quality measurement on signal transferred by the selected base station BS, *IP(i)* is the idle period to be used in order to be handled by the selected base station BS and T is the total duration of a frame comprising a downlink part, an uplink part and idle periods.

Effective throughput means that the idle period, wherein no symbols are transmitted and received by at least the terminal TE, is taken into account for the determination of the throughput.

At next step S607, the processor 400 checks if there is at least one base station BS for which quality measurement on the signal transferred by the base station BS is comprised in the received message which has not been selected.

If a base station BS for which quality measurement on the signal transferred by the base station BS is comprised in the received message has not been selected, the processor 400 moves to step S608, selects another base station BS and returns to step S606.

If each base station BS for which quality measurement on the signal transferred by the base station BS is comprised in the received message has been selected, the processor 400 moves to step S609.

At that step, the processor 400 selects the base station BS which has the highest determine throughput as the base station BS to which a handover has to be conducted and a handover is classically executed.

After that, the processor 400 interrupts the present algorithm.

Fig. 7 is an example of algorithm executed by a half duplex terminal when the half-duplex terminal implements the present invention.

More precisely, the present algorithm is executed by the processor 500 of each terminal TE each time downlink signals are received in a measurement channel of at least one base station BS.

The terminal TE knows the idle period IP to be used in order to be handled by the base stations BS which are in the vicinity of the terminal TE.

The idle period to be used in order to be handled by a base station BS can be the idle period used in the cell of the base station BS by each terminal TE or can be the terminal specific idle period as disclosed in the Fig. 1b.

As example, the idle period IP to be used in order to be handled by each base station BS is broadcasted by the base station BS which handles the terminal TE or is broadcasted by each base station BS or is identical for each base station BS.

At step S700, the processor 500 detects the reception by the channel interface 505 of signals transferred by surrounding base stations BS.

When the terminal TE is handled by a base station BS, the signals are the signal transferred by the base station BS which handles the terminal TE and at least signal transferred by at least another base station BS.

At next step S701, the processor 500 commands the channel interface 505 to execute some quality measurements on downlink signals. The channel interface 505 measures the signals transferred in each measurement channel of base station BS it can find and memorises the base stations BS and the measurements for which the quality measurements are higher than a predetermined value.

At next step S702, the processor 500 determines, for each quality measurement on signal transferred by a base station BS, the modulation and coding scheme which is appropriate with the quality measurement.

At next step S703, the processor 500 obtains, for each quality measurement on the signal transferred by a base station BS, the idle period of the base station BS.

At next step S704, the processor 500 selects a first base station BS for which quality measurement has been executed on signal transferred by the base station BS.

At next step S705, the processor 500 determines the effective throughput that can be expected between the base station BS and the half-duplex terminal TE.

The effective throughput is determined according to the determined modulation and coding scheme and the idle period to be used in order to be handled by the base station BS.

The effective throughput is determined according to the following formula:

$$\text{Throughput(i)} = MCS(i) * \frac{T - IP(i)}{T}$$, where *i*

is an index associated to the selected base station BS.

At next step S706, the processor 500 checks if there is at least one base station BS for which quality measurement has been executed on signal transferred by the base station BS and which has not been selected.

If each base station BS for which quality measurement has been executed on signal transferred by the base station BS and which has not been selected, the processor 500 moves to step S707, selects another base station BS and returns to step S705.

If each base station BS for which quality measurement on the signal transferred by the base station BS is comprised in the received message has been selected, the processor 500 moves to step S708.

At that step, the processor 500 selects the base station BS which has the highest determined effective throughput as the base station BS.

The selected base station BS is as example the base station BS to which a handover has to be conducted or is the base station BS to which, a random access procedure is initiated by the terminal TE.

Naturally, many modifications can be made to the embodiments of the invention described above without departing from the scope of the present invention.

## Claims

1. Method for selecting, in a wireless cellular telecommunication network, which base station, among plural base stations (BS 1, BS2), has to handle a half-duplex terminal (TE), the base stations transferring signals in a respective cell, the half duplex terminal, when being handled by a base station, not transferring and not receiving signals during a period of time, called idle period, **characterized in that** the method comprises the steps of :

> - obtaining (S602, S701) quality measurements on the signals transferred by the base stations,
> - determining (S603, S702), from the quality measurement on the signal transferred by each base station, the modulation and coding scheme which is appropriate with the quality measurement,
> - obtaining (S604, S703), for each base station, the idle period to be used in order to be handled by the base station,
> - determining (S606, S705), from the quality measurements and idle periods, effective throughputs that can be expected between the base stations and the half-duplex terminal,
> - selecting (S609, S708) the base station which has to handle the half-duplex terminal according to the effective throughputs that can be expected between the base stations and the half-duplex terminal.

2. Method according to claim 1, **characterized in that** the selected base station is the base station providing the maximum effective throughput.

3. Method according to claim 2, **characterised in that** the wireless telecommunication network uses half duplex Frequency Division Duplexing scheme and **in that** only half-duplex terminals handled by a base station do not transfer and do not receive signals during the idle period to be used in order to be handled by the base station or the half-duplex terminals handled by a base station and the base station do not transfer and do not receive signals during the idle period to be used in order to be handled by the base station.

4. Method according to claim 2, **characterised in that** the wireless telecommunication network uses Time Division Duplexing scheme and **in that** the half-duplex terminals handled by a base station and the base station do not transfer and do not receive signals during the idle period to be used in order to be handled by the base station.

5. Method according to claim 3 or 4, **characterized in that** one base station handles the half-duplex terminal and **in that** the method is executed by the base station which handles the half-duplex terminal.

6. Method according to claim 5, **characterized in that** the quality measurements are obtained (S602) from a measurement report transferred by the half-duplex terminal.

7. Method according to claim 3 or 4, **characterized in that** the method is executed by the half-duplex terminal.

8. Method according to claim 7, **characterized in that** the quality measurements are measured (S701) by the half-duplex terminal.

9. Method according to claim 8, **characterized in that** the method comprises further step of initiating a random access procedure with the selected base station.

10. Device for selecting, in a wireless cellular telecommunication network, which base station, among plural base stations (BS1, BS2), has to handle a half-duplex terminal (MT), the base stations transferring signals in a respective cell, the half duplex terminal, when being handled by the first base station, not transferring and not receiving signals during a period of time, **characterized in that** the device comprises :

> - means (405, 505) for obtaining quality measurements on the signals transferred by the base stations,
> - means (400, 500) for determining, from the quality measurement on the signal transferred by each base station, the modulation and coding scheme which is appropriate with the quality measurement,
> - means (400, 500) for obtaining, for each base station, the idle period to be used in order to be handled by the base station,
> - means (400, 500) for determining, from the quality measurements and idle periods, effective throughputs that can be expected between the base stations and the half-duplex terminal,
> - means (400, 500) for selecting the base station which has to handle the half-duplex terminal according to the effective throughputs.

11. Device according to claim 10, **characterized in that** one base station handles the half-duplex terminal and **in that** the device is included in the base station which handles the half-duplex terminal.

**12.** Device according to claim 10, **characterized in that** the device is included in the half-duplex terminal.

**13.** Computer program which can be directly loadable into a programmable device, comprising instructions or portions of code for implementing the steps of the method according to claims 1 to 9, when said computer program is executed on a programmable device.

**Patentansprüche**

**1.** Verfahren zum Auswählen in einem drahtlosen Telekommunikationsnetz, welche Basisstation unter mehreren Basisstationen (BS1, BS2) ein Halbduplex-Endgerät (TE) handhaben muss, wobei die Basisstationen Signale in einer jeweiligen Zelle transferieren, wobei das Halbduplex-Endgerät, wenn es durch die Basisstation gehandhabt wird, während einer Zeitperiode, die Ruhezeit genannt wird, Signale nicht transferiert und nicht empfängt, **dadurch gekennzeichnet, dass** das Verfahren die folgenden Schritte aufweist:

- Erhalten (S602, S701) von Qualitätsmessungen an den durch die Basisstationen transferierten Signalen,
- Bestimmen (S603, S702) des Modulations- und Codierschemas, das der Qualitätsmessung entspricht, aus der Qualitätsmessung an dem durch jede Basisstation transferierten Signal,
- Erhalten (S604, S703) der Ruhezeit, um verwendet zu werden, um durch die Basisstation gehandhabt zu werden, für jede Basisstation,
- Bestimmen (S606, S705) effektiver Durchsätze, die zwischen den Basisstationen und dem Halbduplex-Endgerät erwartet werden können, aus den Qualitätsmessungen und Ruhezeiten,
- Auswählen (S609, S708) der Basisstation, die das Halbduplex-Endgerät handhaben muss, gemäß den effektiven Durchsätzen, die zwischen den Basisstationen und dem Halbduplex-Endgerät erwartet werden können.

**2.** Verfahren nach Anspruch 1, **dadurch gekennzeichnet, dass** die ausgewählte Basisstation die Basisstation ist, die den maximalen effektiven Durchsatz zur Verfügung stellt.

**3.** Verfahren nach Anspruch 2, **dadurch gekennzeichnet, dass** das drahtlose Telekommunikationsnetz ein Halbduplex-Frequenzduplex-Schema verwendet und dass nur durch eine Basisstation gehandhabte Halbduplex-Endgeräte während der Ruhezeit Signale nicht transferieren und nicht empfangen, um verwendet zu werden, um durch die Basisstation gehandhabt zu werden, oder die durch eine Basisstation gehandhabten Halbduplex-Endgeräte und die Basisstation während der Ruhezeit Signale nicht transferieren und nicht empfangen, um verwendet zu werden, um durch die Basisstation gehandhabt zu werden.

**4.** Verfahren nach Anspruch 2, **dadurch gekennzeichnet, dass** das drahtlose Telekommunikationsnetz ein Zeitduplex-Schema verwendet und dass die durch eine Basisstation gehandhabten Halbduplex-Endgeräte und die Basisstation während der Ruhezeit Signale nicht transferieren und nicht empfangen, um verwendet zu werden, um durch die Basisstation gehandhabt zu werden.

**5.** Verfahren nach Anspruch 3 oder 4, **dadurch gekennzeichnet, dass** eine Basisstation das Halbduplex-Endgerät handhabt und dass das Verfahren durch die Basisstation ausgeführt wird, die das Halbduplex-Endgerät handhabt.

**6.** Verfahren nach Anspruch 5, **dadurch gekennzeichnet, dass** die Qualitätsmessungen aus einem durch das Halbduplex-Endgerät transferierten Messbericht erhalten werden (S602).

**7.** Verfahren nach Anspruch 3 oder 4, **dadurch gekennzeichnet, dass** das Verfahren durch das Halbduplex-Endgerät ausgeführt wird.

**8.** Verfahren nach Anspruch 7, **dadurch gekennzeichnet, dass** die Qualitätsmessungen durch das Halbduplex-Endgerät gemessen werden (S701).

**9.** Verfahren nach Anspruch 8, **dadurch gekennzeichnet, dass** das Verfahren einen weiteren Schritt zum Initiierten einer Zufallszugriffsprozedur mit der ausgewählten Basisstation aufweist.

**10.** Vorrichtung zum Auswählen in einem drahtlosen Telekommunikationsnetz, welche Basisstation unter mehreren Basisstationen (BS1, BS2) ein Halbduplex-Endgerät (MT) handhaben muss, wobei die Basisstationen Signale in einer jeweiligen Zelle transferieren, wobei das Halbduplex-Endgerät, wenn es durch die Basisstation gehandhabt wird, während einer Zeitperiode Signale nicht transferiert und nicht empfängt, **dadurch gekennzeichnet, dass** die Vorrichtung folgendes aufweist:

- eine Einrichtung (405, 505) zum Erhalten von Qualitätsmessungen an den durch die Basisstationen transferierten Signalen,
- eine Einrichtung (400, 500) zum Bestimmen des Modulations- und Codierschemas, das der Qualitätsmessung entspricht, aus der Qualitätsmessung an dem durch jede Basisstation transferierten Signal,

- eine Einrichtung (400, 500) zum Erhalten der Ruhezeit, um verwendet zu werden, um durch die Basisstation gehandhabt zu werden, für jede Basisstation,

- eine Einrichtung (400, 500) zum Bestimmen effektiver Durchsätze, die zwischen den Basisstationen und dem Halbduplex-Endgerät erwartet werden können, aus den Qualitätsmessungen und Ruhezeiten,

- eine Einrichtung (400, 500) zum Auswählen der Basisstation, die das Halbduplex-Endgerät handhaben muss, gemäß den effektiven Durchsätzen.

**11.** Vorrichtung nach Anspruch 10, **dadurch gekennzeichnet, dass** eine Basisstation das Halbduplex-Endgerät handhabt und dass die Vorrichtung in der Basisstation enthalten ist, die das Halbduplex-Endgerät handhabt.

**12.** Vorrichtung nach Anspruch 10, **dadurch gekennzeichnet, dass** die Vorrichtung in dem Halbduplex-Endgerät enthalten ist.

**13.** Computerprogramm, das direkt ladbar in eine programmierbare Vorrichtung sein kann, mit Anweisungen oder Teilbereichen eines Codes zum Implementieren der Schritte des Verfahrens nach den Ansprüchen 1 bis 9, wenn das Computerprogramm auf einer programmierbaren Vorrichtung ausgeführt wird.

**Revendications**

**1.** Méthode pour sélectionner, dans un réseau de télécommunication cellulaire sans fil, quelle station de base, parmi une pluralité de stations de base (BS1, BS2), doit prendre en charge un terminal semi-duplex (TE), les stations de base transférant des signaux dans une cellule respective, le terminal semi-duplex, en étant pris en charge par une station de base, ne transférant pas et ne recevant pas de signaux pendant une période appelée période à vide, **caractérisée en ce que** la méthode comporte les étapes de :

- obtention (S602, S701) de mesures de qualité sur les signaux transférés par les stations de base,
- détermination (S603, S702), à partir de la mesure de qualité sur le signal transféré par chaque station de base, de la modulation et du codage appropriés à la mesure de qualité,
- obtention (S604, S703), pour chaque station de base, de la période à vide à utiliser pour être pris en charge par la station de base,

- détermination (S606, S705), à partir des mesures de qualité et des périodes à vide, des débits effectifs qui peuvent être prévus entre les stations de base et le terminal semi-duplex,
- sélection (S609, S708) de la station de base qui doit prendre en charge le terminal semi-duplex selon les débits effectifs qui peuvent être prévus entre les stations de base et le terminal semi-duplex.

**2.** Méthode selon la revendication 1, **caractérisée en ce que** la station de base sélectionnée est la station de base fournissant le débit effectif maximum.

**3.** Méthode selon la revendication 2, **caractérisée en ce que** le réseau de télécommunication sans fil utilise un multiplexage par division de fréquence semi-duplex et **en ce que** seuls les terminaux semi-duplex pris en charge par une station de base ne transfèrent pas et ne reçoivent pas de signaux au cours de la période à vide utilisée afin d'être pris en charge par la station de base ou les terminaux semi-duplex pris en charge par une station de base et la station de base ne transfèrent pas et ne reçoivent pas de signaux au cours de la période à vide utilisée pour être pris en charge par la station de base.

**4.** Méthode selon la revendication 2, **caractérisée en ce que** le réseau de télécommunication sans fil utilise un multiplexage par division temporelle semi-duplex et **en ce que** les terminaux semi-duplex pris en charge par une station de base et la station de base ne transfèrent pas et ne reçoivent pas de signaux au cours de la période à vide utilisée pour être pris en charge par la station de base.

**5.** Méthode selon la revendication 3 ou 4, **caractérisée en ce que** une station de base prend en charge le terminal semi-duplex et **en ce que** la méthode est exécutée par la station de base qui prend en charge le terminal semi-duplex.

**6.** Méthode selon la revendication 5, **caractérisée en ce que** les mesures de qualité sont obtenues (S602) à partir d'un rapport de mesure transféré par le terminal semi-duplex.

**7.** Méthode selon la revendication 3 ou 4, **caractérisée en ce que** la méthode est exécutée par le terminal semi-duplex.

**8.** Méthode selon la revendication 7, **caractérisée en ce que** les mesures de qualité sont mesurées (S701) par le terminal semi-duplex.

**9.** Méthode selon la revendication 8, **caractérisée en ce que** la méthode comporte en outre l'étape d'initiation d'une procédure d'accès aléatoire avec la station de base choisie.

**10.** Dispositif pour sélectionner, dans un réseau de télécommunication cellulaire sans fil, quelle station de base, parmi une pluralité de stations de base (BS1, BS2), doit prendre en charge un terminal semi-duplex (la TA), les stations de base transférant des signaux dans une cellule respective, le terminal semi-duplex, en étant pris en charge par la station de la première base, ne transférant pas et ne recevant pas de signaux pendant une période, **caractérisé en ce que** le dispositif comporte :

   - des moyens (405, 505) pour obtenir des mesures de qualité sur les signaux transférés par les stations de base,
   - des moyens (400, 500) pour déterminer, à partir de la mesure de qualité sur le signal transféré par chaque station de base, la modulation et le codage appropriés avec la mesure de qualité,
   - des moyens (400, 500) pour obtenir, pour chaque station de base, la période à vide à utiliser pour être pris en charge par la station de base,
   - des moyens (400, 500) pour déterminer, à partir des mesures de qualité et des périodes à vide, les débits effectifs qui peuvent être prévus entre les stations de base et le terminal semi-duplex,
   - des moyens (400, 500) pour sélectionner la station de base qui doit prendre en charge le terminal semi-duplex selon les débits effectifs.

**11.** Dispositif selon la revendication 10, **caractérisé en ce qu'**une station de base prend en charge le terminal semi-duplex et **en ce que** le dispositif est compris dans la station de base qui prend en charge le terminal.

**12.** Dispositif selon la revendication 10, **caractérisé en ce que** le dispositif est compris dans le terminal semi-duplex.

**13.** Programme informatique qui peut être directement chargeable dans un dispositif programmable, comportant des instructions ou des parties du code pour mettre en application les étapes de la méthode selon les revendications 1 à 9, quand ledit programme informatique est exécuté sur un dispositif programmable.

Fig. 1a

Fig. 1b

BS

400 — Processor

403 — RAM          Channel I/F — 405          BSAnt

402 — ROM          401

Fig. 4

TE          TEAnt

500 — Processor

503 — RAM          Channel I/F — 505

502 — ROM          501

Fig. 5

Fig. 2a

Fig. 2b

Fig. 3

Fig. 6

Receive downlink signals — S700

Get measurements — S701

Determine MCSs — S702

Get Idle periods — S703

First BS — S704

Next — S707

Calculate MCSi*(T-IP(i))/T — S705

Other BS? — S706

Select BS — S708

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1746743 A
- US 20040266474 A
- GB 2418806 A